# NEUE EUROPÄISCHE PATENTSCHRIFT

(11) **EP 1 974 600 B2**
(45) Veröffentlichungstag und Bekanntmachung des Hinweises auf die Entscheidung über den Einspruch: **04.12.2013**
(45) Hinweis auf die Patenterteilung: 25.08.2010
(21) Anmeldenummer: 08101367.4
(22) Anmeldetag: 07.02.2008
(51) Int. Cl.: A01D 90/02

(54) **Ladevorrichtung an einer Erntemaschine**
Loading device for a harvesting machine
Dispositif de chargement d'une moissonneuse

(30) Priorität: 28.03.2007 DE 202007004530 U
(43) Veröffentlichungstag der Anmeldung: 01.10.2008
(60) Teilanmeldung: 09156879.0
(73) Patentinhaber: B. Strautmann & Söhne GmbH & Co.KG, 49196 Bad Laer (DE)
(72) Erfinder: Kleine-Nieße, Richard, 49563, Lienen (DE)
(74) Vertreter: Dantz, Jan Henning

(56) Entgegenhaltungen:
- EP-A- 0 236 106
- EP-A1- 1 980 144
- DE-A1- 1 582 416
- DE-A1- 1 582 416
- DE-A1- 2 433 559
- DE-A1- 3 445 050
- DE-A1- 10 249 596
- DE-A1- 19 501 382
- DE-A1- 19 646 316
- DE-U1-202007 004 530

## Beschreibung

Die Erfindung betrifft eine Ladevorrichtung an einer Erntemaschine nach dem Oberbegriff des Anspruchs 1.

Ladevorrichtungen dieser Art finden z.B. an leistungsstarken Ladewagen und Ballenpressen Verwendung. Bei der Übergabe des Futters von der Aufnahmevorrichtung an die Pressvorrichtung wird das Futter in die Zwischenräume der auf der Presswalze befindlichen Presszinken abgegeben. Die Presszinken sind in radialen Ebenen gleichmäßig am Umfang der Presswalze verteilt, wobei nebeneinander liegende Presszinken jeweils zueinander versetzt sind und so spiralförmige Reihen bilden, hierdurch werden stoßförmige Belastungen vermindert und eine verbesserte Laufruhe erzielt. Bekannt ist auch die Anbringung einer Förderwalze zwischen Aufnahmevorrichtung und Pressvorrichtung, die aber nach bislang bekannten Konstruktionen den Futterfluss im Zuführbereich zur Pressvorrichtung bislang nicht entscheidend verbessert.

Die Futteranhäufungen in der Mitte des Querschnitts eines Futterschwades, verursachen beim Laden in diesem Bereich eine hohe Verdichtung des Futters, dieses begünstigt einen unruhigen, stoßförmigen Lauf der Ladevorrichtung, erfordert einen höheren Leistungsbedarf und verursacht einen höheren mechanischen Verschleiß. In den seitlichen Bereichen sind die auftretenden Belastungen dagegen gering.

Bisher bekannte Ladevorrichtungen, denen eine Förderwalze zugeordnet ist, beheben die genannten Probleme nicht wesentlich.

In der DE 195 01 382 wird ein Ladewagen beschrieben, dessen Ladevorrichtung mit einer Förderwalze zwischen Aufnahmevorrichtung und Pressvorrichtung ausgestattet ist. Die Förderwalze hat hierbei die Funktion, von der Aufnahmevorrichtung, die ohne feststehenden Trommelmantel, bzw. ohne die üblichen Abstreifer ausgerüstet ist, das Futter zu übernehmen. Die auf der Förderwalze angeordneten Zinkensterne durchkämmen hierbei die ungesteuerten Aufnahmewerkzeuge, um das Futter abzunehmen und es der Presswalze vorzulegen. Eine seitliche Bewegung im Futterstrom findet nicht statt. Die Funktionsweise ist störanfällig.

Nach der DE 102 49 596 sind nach der Aufnahmetrommel eine Fördertrommel und eine Presstrommel, jeweils gleichsinnig mit dieser rotierend, angebracht. Die Drehrichtung der Presstrommel ist für den Übergang des Futters in den Pressraum der Presse, insbesondere einer Rundballenpresse unerlässlich, für den Übergang des Futters in den Laderaum eines Ladewagens jedoch negativ. Ein nach oben gerichteter Futterstrom ergibt hierbei eine günstigere Befüllung. Die während der Arbeit um die Achse der Presswalze pendelnd angeordnete Förderwalze ergibt ein unruhiges Laufverhalten und ferner, eine verlängerte Bauweise.

In der Patentanmeldung DE 29 22 796 wird eine Aufnahmevorrichtung gezeigt, die zwischen Pressaggregat und Aufnahmetrommel mit einer gegenläufigen Schneidwalze ausgestattet ist. Die Schneidwalze ist nicht in der Lage, den zu bewältigenden Futterstrom seitlich zu verteilen. Der Schwenkpunkt der Aufnahmetrommel ist gegenüber der Mittelachse der Schneidwalze versetzt und verändert während der Arbeit laufend den Übergabeabstand zu dieser. Die wegen der Ausführung als Schneidwalze relativ große Dimensionierung ergibt eine teure Bauweise.

Nach der DE 37 07 788 ist eine Querverteilung des aufgenommenen Futters bekannt. Die Fördertrommel zeigt hierbei keine fixierte Lage, um welche die Aufsammeltrommel mit konstantem Abstand pendelt. Die Neigung zu unruhigem Lauf und die Verstopfungsgefahr im Übergabebereich des Futters sind erhöht.

Die DE 38 11 649 zeigt eine Aufnahmevorrichtung, insbesondere für Ballenpressen, bei der das Erntegut - über Sensoren gesteuert - mittels der Querverschiebung einer Walze oder durch die Verstellung einer Schwenkdeichsel seitlich verteilt wird. Diese Ausführung ist von aufwendiger, langgestreckter Bauweise. Die Futterübergabe ist durch die Walzenanordnungen und die Abstände zwischen den Walzen nicht optimal.

Die DE 1 582 416 offenbart eine Aufnehmer- und Transporttrommel für Selbstladewagen, bei der radial hervorstehende Zinken vorgesehen sind, die durch Schlitze an umgebenden Führungsblechen geführt sind. Die Zinken sind dabei versetzt angeordnet, so dass an beiden Seiten der Trommel eine spiralförmige Anordnung der Zinken vorhanden ist.

Die Aufgabenstellung dieser Erfindung ist, eine Verbesserung der Laufruhe zu erzielen, den Leistungsbedarf herabzusetzen und Futterverdichtung bzw. Futterquetschung durch die Spitzen der Presszinken weitgehend zu vermeiden.

Dies wird durch Ladevorrichtungen gemäß den Merkmalen des Anspruches 1 erreicht.

Durch die spiralförmige Anordnung der Federzinken an der Aufnahmetrommel gemäß Anspruch 1 findet eine Entzerrung des in der Schwadmitte gehäuft auftretenden Ladegutes bei der Übergabe statt, dadurch, dass Futter auf den Zonen starken Materialflusses zu den Zonen geringeren Materialflusses verschoben wird.

Vorzugsweise wird durch die Fixierung der Förderwalze gegenüber der Presswalze während der Futteraufnahme die Laufruhe der Ladevorrichtung verbessert.

Die Erfindung wird nachstehend an Ausführungsbeispielen beschrieben und in den Zeichnungen dargestellt.

Es zeigen:
- Figur 1: einen Querschnitt durch die Ladevorrichtung mit abgesenkter Aufnahmevorrichtung

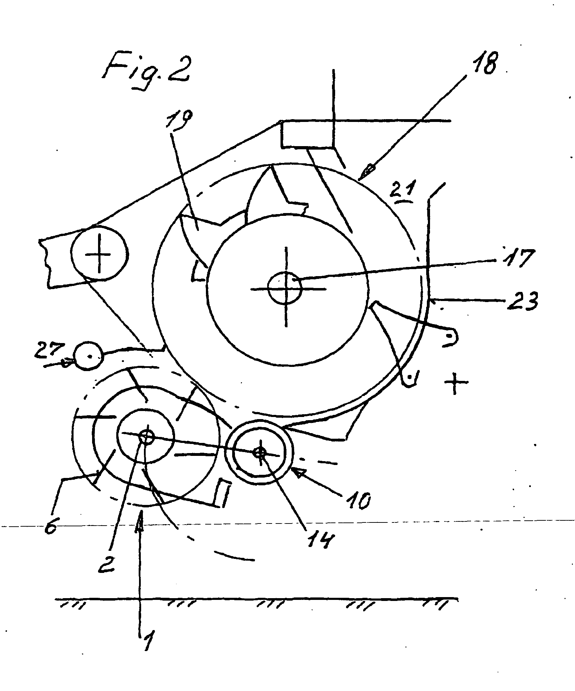

- Figur 2: einen Querschnitt mit angehobener Aufnahmevorrichtung
- Figur 3: die Anordnung von Spiralen und deren Teilabschnitte auf der Förderwalze, bezogen auf den gängigen Querschnitt eines Futterschwades

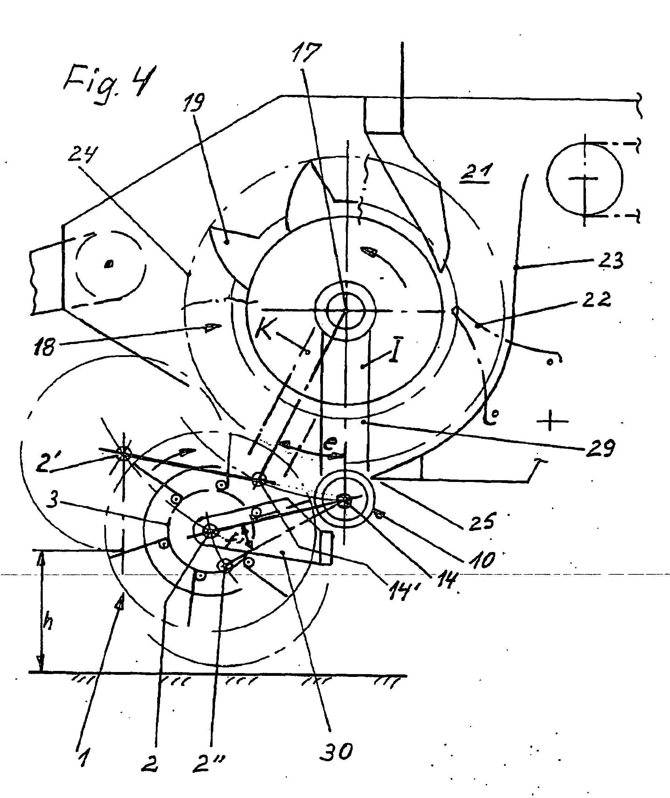

- Figur 4: ein weiteres Ausführungsbeispiel
- Figur 5: ein weiteres Ausführungsbeispiel das nicht zu Erfindung gehört.

Im Vorderteil 9 eines Ladewagens ist die Ladevorrichtung, im Wesentlichen aus der Aufnahmevorrichtung 1, der Förderwalze 10 und der Pressvorrichtung 18 bestehend, angeordnet.

Die wesentlichen Bestandteile der Aufnahmevorrichtung 1 sind die Aufnahmetrommel 3, mit der Achse 2, der die aus Abstreifern 8 gebildete Abstreiftrommel 7 tragende Querholm 4 und die an der Aufnahmetrommel 3 befestigten Federn 5, mit den aus der Abstreiftrommel hervortretenden Förderzinken 6.

Mittels eines Rahmengestells 30 ist die Aufnahmevorrichtung 1, um die Achse 14 der Förderwalze 10, pendelnd aufgehängt.

Die Förderwalze 10 besteht im Wesentlichen aus dem Walzenrohr 11, welches mit gegenläufig angeordneten Spiralen 12 und 13 besetzt ist und der Achse 14, die nahe des Zinkenspitzenkreises 24 und nahe der Einlaufkante 25 angeordnet, in den Seitenwänden der Pressvorrichtung 18 gelagert ist.

Die relevanten Bestandteile der Pressvorrichtung 18 sind, die in den Seitenwänden gelagerte Mittelachse 17, die mit Presszinken 19 besetzte Presswalze 20 und der mit der Rückwand 23 begrenzte Presskanal 21, in den Schneidmesser 22 hineinragen. Eine Einlaufkante 25 an der Rückwand 23 reicht nah an die Förderwalze 10 heran.

Das auf dem Boden liegende, im allgemeinen in Futterschwaden zusammengelegte Erntegut, wird bei der Aufnahme zunächst von den Federzinken 6 erfasst und über die Abstreifer 8, generell unterstützt durch eine die Futterführung verbessernde, sich pendelnd anpassbare Leitvorrichtung 27, zur Förderwalze 10 und zur Pressvorrichtung 18 geschoben.

Förderwalze 10 und Presszinken 19 übernehmen das Futter, welches bei der Übernahme zwischen den Spitzen der Presszinken 19 und der Förderwalze 10 und anschließend der Rückwand 23, stark angepresst wird, in die Zwischenräume, die durch die Presszinken 19 und den Zinkenspitzenkreis 24 gebildet werden. Das Futter wird beim Durchgang durch den Presskanal 21 von Schneidmessern 22 durchtrennt und beim Verlassen in den Laderaum 26 geschoben.

Das Walzenrohr 11 ist mit Spiralen 12 und 13 ausgestattet, welche die Futteranhäufung in der Mitte des Futterschwades 28, durch die Förderrichtungen a bzw. b, von der Mitte nach außen auseinanderziehen, so dass das Futter gleichmäßiger verteilt wird. Durch außen angebrachte gegenläufige Teilabschnitte 15 und 16 der Spiralen wird das Auseinanderziehen begrenzt. Durch die unterschiedlichen Umfangsgeschwindigkeiten wird Futter schneller in die Zwischenräume der Presszinken 19 geschoben. Diese Maßnahmen verändern den Querschnitt des Futterschwadens von der Ausgangskontur A in eine flachere Kontur B mit gleichmäßigerem Querschnitt, wodurch die hohen Belastungen und Futterquetschungen im erhöhten, mittleren Bereich der Ausgangskontur A abgesenkt werden. Der Leistungsbedarf verringert sich, der Lauf der Maschine wird ruhiger und die mittleren Schneidmesser 22 werden entlastet. Der Verschleiß an Rückwand 23 und Presszinken 19 wird herabgesetzt.

Um gleichbleibende Übergabebedingungen einzuhalten, ist die Achse 14 unverrückbar zur Mittelachse 17 platziert. Durch die direkte Schwenkung der Aufnahmevorrichtung 1 um die Achse 14, werden weniger und einfachere Bauteile benötigt, was die Anordnung noch verbilligt.

In einer weiteren Ausgestaltung der Erfindung werden Aufnahmevorrichtung 1 und Förderwalze 10, zur Erzielung einer größeren Bodenfreiheit h der Aufnahmevorrichtung 1, von Pendelarmen 29, die mit ihrem oberen Ende um die Mittelachse 17 schwenkbar angeordnet sind, getragen.

Die Pendelarme 29 sind beidseitig an den Außenseiten der Ladevorrichtung angeordnet, sie werden über nicht näher dargestellte Steuerorgane, wie z.B. Hydrozylinder, von der Arbeitsstellung I in die Transportstellung K, um den Winkel e, verschwenkt.

In Arbeitsstellung I und Transportstellung K sind die Pendelarme 29 jeweils fixiert.

Am unteren Ende der Pendelarme 29 ist die Förderwalze 10 angeordnet, um deren Achse 14 die Aufnahmevorrichtung 1, während der Futteraufnahme im Bereich des Winkels f schwenkbar, durch allgemein bekannte Tasträder, bodenanpassend gesteuert wird. Die Achse 2 pendelt hier bis zum Lagepunkt 2".

In Transportstellung K befindet sich die Achse 14 im Lagepunkt 14', die Achse 2 der Aufnahmetrommel 3 im Lagepunkt 2'.

Bei einer Aufnahmevorrichtung 1, deren ungesteuerten Federzinken 6 in radialen Umlaufebenen zwischen den Abstreifern 8 umlaufen, ist es möglich, letztere entgegen der vornehmlich in Querreihen angeordneten bekannten Ausführungen, diese an der Aufnahmetrommel 3, nach Bedarf versetzt anzuordnen.

Die Anbringung in nicht näher dargestellter, spiralförmiger Ausnehmung kann z.B. so erfolgen, dass am Umfang der Aufnahmetrommel 3 die Federzinken 6 spiralförmig, mit der Steigungs- und Förderrichtung von der Mitte nach außen angeordnet sind. Diese Anordnung unterstützt die Verteilung der Futteranhäufung des Futterschwades von der Mitte nach außen. Die spiralförmige Anordnung der Federzinken 6 verändert vorteilhaft die schubweise Futteraufnahme in eine gleichmäßigere und schonendere.

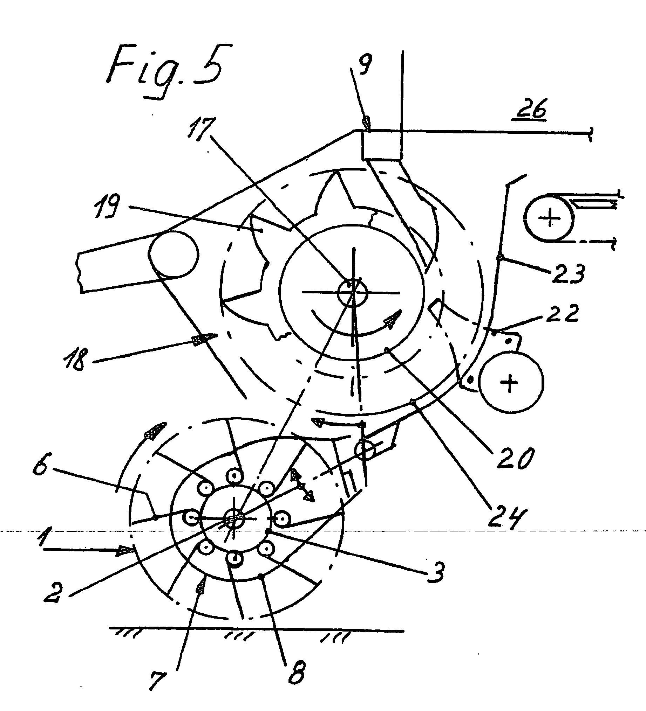

In Figur 5 ist eine Ladevorrichtung gezeigt, bei der die Aufnahmevorrichtung 1 bzw. deren Aufnahmetrommel 3 Halm- und Blattgut unmittelbar in die Pressvorrichtung 18 übergibt, von wo aus das Halm- und Blattgut einem nachgeordneten Laderaum 26 zugeführt wird. Hier ist also auf die Anordnung einer Förderwalze zwischen der Aufnahmetrommel 3 und der Presswalze 20 verzichtet worden, wobei dies möglich ist dadurch, dass auf der Aufnahmetrommel 3 eine Vielzahl von Federzinken 6 in spiralförmiger Anordnung befestigt ist.

Dabei kann durchaus auch eine mehrgängig spiralförmige Anordnung der Federzinken 6 realisiert sein oder alternativ können die Steigungen der spiralförmigen Anordnung der Federzinken 6 an der Aufnahmetrommel 3 in gegenläufige Teilabschnitte unterteilt sein.

In jedem Falle wird auch hier sichergestellt, dass das in der Schwadmitte gehäuft auftretende Ladegut bei der Übergabe verteilt und entzerrt wird, so dass das Futter aus den Zonen starken Materialflusses zu den Zonen geringeren Materialflusses verschoben wird.

Somit treten auch hier die gleichen Vorteile ein wie weiter oben bei der Anordnung einer zusätzlichen Förderwalze zwischen Aufnahmetrommel 3 und Presswalze 20 beschrieben.

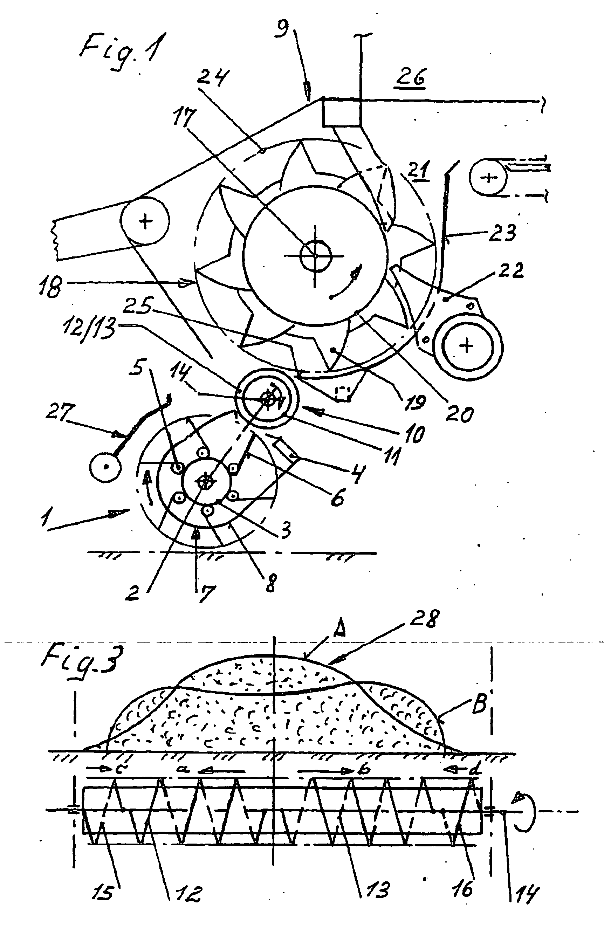

Wie sich insbesondere aus den Figuren 1 und 5 und hier speziell durch die in diesen Figuren eingezeichneten Drehrichtungspfeile ergibt, findet im Übergabebereich zwischen der Förderwalze 10 und der Presswalze 20 (Figur 1) ein Drehrichtungswechsel statt, wobei die Presswalze 20 jeweils entgegen der Drehrichtung der Förderwalze 10 im Gegenuhrzeigersinne rotierend angetrieben wird. Damit fördert die Presswalze 20 unmittelbar in den Presskanal 21.

**Bezugszeichenliste**

| | | | |
|---|---|---|---|
| 1 | Aufnahmevorrichtung | A | Ausgangskontur |
| 2 | Achse | B | Kontur |
| 2' | Lagepunkt | I | Arbeitsstellung |
| 2" | Lagepunkt | K | Transportstellung |
| 3 | Aufnahmetrommel | | |
| 4 | Querholm | | |
| 5 | Feder | | |
| 6 | Federzinken | | |
| 7 | Abstreiftrommel | | |
| 8 | Abstreifer | a | Förderrichtung |
| 9 | Vorderteil | b | Förderrichtung |
| 10 | Förderwalze | c | Förderrichtung |
| 11 | Walzenrohr | d | Förderrichtung |
| 12 | Spirale | e | Winkel |
| 13 | Spirale | f | Winkel |
| 14 | Achse | h | Bodenfreiheit |
| 14' | Lagepunkt | | |
| 15 | Teilabschnitt | | |
| 16 | Teilabschnitt | | |
| 17 | Mittelachse | | |
| 18 | Pressvorrichtung | | |
| 19 | Presszinken | | |
| 20 | Presswalze | | |
| 21 | Presskanal | | |
| 22 | Schneidmesser | | |
| 23 | Rückwand | | |
| 24 | Zinkenspitzenkreis | | |
| 25 | Einlaufkante | | |
| 26 | Laderaum | | |
| 27 | Leitvorrichtung | | |
| 28 | Futterschwad | | |
| 29 | Pendelarm | | |
| 30 | Rahmengestell | | |

## Patentansprüche

1. Ladevorrichtung an einer Erntemaschine, mit welcher am Boden liegendes Halm- und Blattgut von einer Aufnahmevorrichtung (1) aufgenommen und mittels einer Förderwalze (10) und einer Pressvorrichtung (18) einem nachgeordneten Laderaum (26) zugeführt wird, wobei die Aufnahmevorrichtung (1) eine quer zur Fahrtrichtung der Erntemaschine waagerecht angeordnete Aufnahmetrommel (3) umfasst und dass an der Aufnahmetrommel (3) Federzinken (6) in mehrgängiger spiralförmiger Anordnung befestigt sind, **dadurch gekennzeichnet, dass** die Steigungen der spiralförmigen Anordnung der Federzinken (6) an der Aufnahmetrommel (3) in gegenläufige Teilabschnitte unterteilt sind, und die Förderwalze (10) mit Spiralen (12,13) ausgestattet ist, welche eine Futteranhäufung in der Mitte eines Futterschwades (28) von der Mitte nach außen auseinanderziehen.

2. Ladevorrichtung nach Anspruch 1, **dadurch gekennzeichnet, dass** die Aufnahmetrommel (3) parallel um die Achse (14) einer Förderwalze (10) schwenkbar gelagert ist und dass die Förderwalze (10) gegenüber einer Presswalze (20) eine unverrückbare Position einnimmt, wobei die Förderwalze (10) auf ihrer ganzen oder auf einem Teil ihrer Länge mit Spiralen (12 oder 13) besetzt ist.

3. Ladevorrichtung nach Anspruch 2, **dadurch gekennzeichnet, dass** die Spiralen (12 und 13) gegenläufige Steigungsrichtungen aufweisen.

4. Ladevorrichtung nach einem der Ansprüche 2 oder 3, **dadurch gekennzeichnet, dass** die Spiralen (12 und 13) in Teilabschnitte (15 und 16) in gegenläufigen Steigungsrichtungen unterteilt sind.

5. Ladevorrichtung nach einem der Ansprüche 1 bis 4, **dadurch gekennzeichnet, dass** die Umfangsgeschwindigkeit der Förderwalze (10) höher ist als die Umfangsgeschwindigkeit der Presswalze (20) an ihrem Zinkenspitzenkreis (24).

6. Ladevorrichtung nach einem der Ansprüche 1 bis 5, **dadurch gekennzeichnet, dass** die Umfangsgeschwindigkeit der Förderwalze (10) schneller ist als die Umfangsgeschwindigkeit der Aufnahmetrommel (3).

7. Ladevorrichtung nach einem der Ansprüche 1 bis 6, **dadurch gekennzeichnet, dass** die Drehzahl der Förderwalze (10) variierbar ist.

8. Ladevorrichtung nach einem der Ansprüche 1 bis 7, **dadurch gekennzeichnet, dass** Förderwalze (10) und Aufnahmevorrichtung (1) mittels eines Rahmengestells (30) verbunden sind.

9. Ladevorrichtung nach einem der Ansprüche 1 bis 8, **dadurch gekennzeichnet, dass** die Förderwalze (10) an in Arbeitsstellung fest positionierten, um die Mittelachse (17) der Presswalze (20) schwenkbaren Pendelarmen (29) angeordnet ist.

10. Ladevorrichtung nach einem der vorhergehenden Ansprüche, **dadurch gekennzeichnet, dass** die Presswalze (20) entgegen der Drehrichtung der vorgeschalteten Aufnahmetrommel (3) im Gegenuhrzeigersinne antreibbar ist.

11. Ladevorrichtung nach einem der Ansprüche 1 bis 10, **dadurch gekennzeichnet, dass** die Presswalze (20) entgegen der Drehrichtung der vorgeschalteten Förderwalze (10) im Gegenuhrzeigersinne antreibbar ist.

## Claims

1. Loading device for a harvesting machine, with which stalks and blades lying on the ground are picked up by a pick-up device (1) and supplied to a downstream loading space (26) by means of a conveying roller (10) and a pressing device (18), wherein the pick-up device (1) comprises a pick-up drum (3) arranged horizontally transversely with respect to the direction of travel of the harvesting machine, and wherein spring tines (6) are fastened to the pick-up drum (3) in a multi-thread, spiral arrangement, **characterized in that** the pitches of the spiral arrangement of the spring tines (6) are divided into opposed subsections on the pick-up drum (3), and that the conveying roller (10) comprises spirals (12, 13) which pull apart a fodder accumulation in the centre of the fodder swath (28) from the center to the outside.

2. Loading device according to Claim 1, **characterized in that** the pick-up drum (3) is mounted parallel in a manner such that it can pivot about the axis (14) of a conveying roller (10), and **in that** the conveying roller (10) takes up an immovable position in relation to a pressing roller (20), the conveying roller (10) being provided with spirals (12 or 13) over the entire length or part of the length thereof.

3. Loading device according to Claim 2, **characterized in that** the spirals (12 and 13) have opposed pitched directions.

4. Loading device according to either of Claims 2 and 3, **characterized in that** the spirals (12 and 13) are divided into subsections (15 and 16) in opposed pitch directions.

5. Loading device according to one of Claims 1 to 4, **characterized in that** the circumferential speed of the conveying roller (10) is higher than the circumferential speed of the pressing roller (20) at the tine tip circle (24) thereof.

6. Loading device according to one of Claims 1 to 5, **characterized in that** the circumferential speed of the conveying roller (10) is more rapid than the circumferential speed of the pick-up drum (3).

7. Loading device according to one of Claims 1 to 6, **characterized in that** the rotational speed of the conveying roller (10) is variable.

8. Loading device according to one of Claims 1 to 7, **characterized in that** the conveying roller (10) and pick-up device (1) are connected by means of a panelled framework (30).

9. Loading device according to one of Claims 1 to 8, **characterized in that** the conveying roller (10) is arranged on swinging arms (29) which are positioned fixedly in the working position and are pivotable about the centre axis (17) of the pressing roller (20).

10. Loading device according to one of the preceding claims, **characterized in that** the pressing roller (20) is drivable in the anti-clockwise direction counter to the direction of rotation of the upstream pick-up drum (3).

11. Loading device according to one of Claims 1 to 10, **characterized in that** the pressing roller (20) is drivable in the anti-clockwise direction counter to the direction of rotation of the upstream conveying roller (10).

## Revendications

1. Dispositif de chargement sur une moissonneuse, à l'aide duquel de la paille et du feuillage se trouvant au sol peuvent être réceptionnés par un dispositif de réception (1) et être conduits au moyen d'un dispositif de compression (18) à un espace de chargement (26) disposé en aval, le dispositif de réception (1) comportant un tambour de réception (3) disposé de manière horizontale transversalement par rapport au sens de déplacement de la moissonneuse et des dents à ressort (6) étant fixées au niveau du tambour de réception (3) dans un agencement multiple en forme de spirale, **caractérisé en ce que** les pas de l'agencement en forme de spirale des dents à ressort (6) sont divisés en sections partielles opposées au niveau du tambour de réception (3), et le cylindre de transport (10) équipé de spirales (12, 13), lesquelles écartent une accumulation de fourrage au centre d'un andain de fourrage (28) du centre vers l'extérieur.

2. Dispositif de chargement selon la revendication 1, **caractérisé en ce que** le tambour de réception (3) est logé de manière à pouvoir pivoter parallèlement autour de l'axe (14) d'un cylindre de transport (10), et **en ce que** le cylindre de transport (10) prend par rapport à un cylindre de compression (20) une position immuable, le cylindre de transport (10) étant pourvu sur toute sa longueur ou sur une partie de celle-ci de spirales (12 ou 13).

3. Dispositif de chargement selon la revendication 2, **caractérisé en ce que** les spirales (12 et 13) présentent des orientations de pas opposées.

4. Dispositif de chargement selon l'une quelconque des revendications 2 ou 3, **caractérisé en ce que** les spirales (12 et 13) sont divisées en sections partielles (15 et 16) dans des orientations de pas opposées.

5. Dispositif de chargement selon l'une quelconque des revendications 1 à 4, **caractérisé en ce que** la vitesse périphérique du cylindre de transport (10) est supérieure à la vitesse périphérique du cylindre de compression (20) au niveau du cercle imaginaire formé par les pointes de dents en rotation (24).

6. Dispositif de chargement selon l'une quelconque des revendications 1 à 5, **caractérisé en ce que** la vitesse périphérique du cylindre de transport (10) est plus élevée que la vitesse périphérique du tambour de réception (3).

7. Dispositif de chargement selon l'une quelconque des revendications 1 à 6, **caractérisé en ce que** le nombre de tours du cylindre de transport (10) est variable.

8. Dispositif de chargement selon l'une quelconque des revendications 1 à 7, **caractérisé en ce que** le cylindre de transport (10) et le dispositif de réception (1) sont reliés au moyen d'un châssis (30).

9. Dispositif de chargement selon l'une quelconque des revendications 1 à 8, **caractérisé en ce que** le cylindre de transport (10) est disposé au niveau de bras à suspension (29) positionnés de manière fixe en position de travail, pouvant pivoter autour de l'axe médian (17) du cylindre de compression (20).

10. Dispositif de chargement selon l'une quelconque des revendications précédentes, **caractérisé en ce que** le cylindre de compression (20) peut être entraîné, dans le sens contraire des aiguilles d'une montre, dans le sens opposé au sens de rotation du tambour de réception (3) monté en amont.

11. Dispositif de chargement selon l'une quelconque des revendications 1 à 10, **caractérisé en ce que** le cylindre de compression (20) peut être entraîné, dans le sens contraire des aiguilles d'une montre, dans le sens opposé au sens de rotation du cylindre de transport (10) monté en amont.
